# EUROPEAN PATENT APPLICATION

(11) **EP 2 592 189 A1**
(43) Date of publication of application: **15.05.2013**
(21) Application number: 10854465.1
(22) Date of filing: 06.07.2010
(51) Int. Cl.: E02F 9/22, F02D 29/04, E02F 9/20

(54) **HORSEPOWER CONTROL SYSTEM OF A HYBRID EXCAVATOR AND CONTROL METHOD THEREFOR**

(71) Applicant: Volvo Construction Equipment AB, 631 85 Eskilstuna (SE)
(72) Inventor: LEE, Chun-Han, Gimhae-si Gyeongsangnam-do 621-785 (KR); KIM, Jin-Seop, Changwon-si Gyeongsangnam-do 641-940 (KR)
(74) Representative: Epping - Hermann - Fischer
(86) International application number: PCT/KR2010/004387
(87) International publication number: WO 2012/005391

(57) **Abstract**

Disclosed are a horsepower control system for a hybrid excavator and a control method thereof which controls the driving of a generator driver or a swing motor driver with a swing power ratio of 1 and a hydraulic power ratio of 1 in a first operation mode, and with a swing power ratio of r (a user set value) and a hydraulic power ratio of 1-r in a second operation mode. When the power required by the user is fully used, energy from an energy storage is used to maximize work capacity. When the total horsepower used is limited to the range of horsepower available, the limited use of the driving device is at a level of horsepower similar to that of a typical system, thereby minimizing fuel consumption.

## Description

### TECHNICAL FIELD

The present invention relates to a horsepower control system for a hybrid excavator and a control method thereof, and more particularly, to such a swing power control system for a hybrid excavator and a control method thereof, in situations where it is necessary to use the full power required by a user without limitation, using the energy of an energy storage device is positively used to maximize the operation amount, however in the cases where it is necessary to use the full power within the range of an available horsepower, the driving device is limitedly used at a horsepower level that is similar to the horsepower level of the existing system to minimize fuel consumption.

### BACKGROUND ART

A conventional hybrid excavator related technology is disclosed in Korean Patent Application No. 10-2007-137478 in which equipment is controlled by a prescribed rule to enhance efficiency of the operation, or in Korean Patent Application No. 10-2001-7016523 in which the operation pattern of a user is read automatically so as to be applied to the control of equipment. However, Korean Patent Application No. 10-2001-7016523 has a difficulty accurately reflecting an actual operational condition, and is merely aimed at reducing fuel consumption but not at increasing the operation amount of the equipment.

### DISCLOSURE OF INVENTION

### TECHNICAL PROBLEM

Accordingly, the present invention has been made to solve the above-mentioned problem occurring in the prior art, and it is an object of the present invention to provide a power control system for a hybrid excavator and a control method thereof, in situations where it is necessary to use the full power required by a user without limitation, a horsepower level is used which is approximately two times higher than the horsepower level of the existing excavator without providing any additional constituent element and incurring any additional costs to maximize the operation amount, while in the case where it is desired to use the full power within the range of an available horsepower, each driving device is limitedly used at a horsepower level that is similar to the horsepower level of the existing system to minimize fuel consumption.

### TECHNICAL SOLUTION

To achieve the above objectives, in one aspect, the present invention provides a horsepower control system for a hybrid excavator, including: an engine; a hydraulic pump configured to be driven by the engine to drive a hydraulic actuator by hydraulic fluid; a generator configured to be driven by the engine to generate electric energy; an energy storage device configured to charge the electric energy generated from the generator and supply the electric energy to an swing electric motor; and a power controller configured to control the driving operation of a generator driver or a swing motor driver with a swing power ratio of 1 (or 100%) and a hydraulic horsepower ratio of 1 using both the power of the energy storage device and the horsepower of the engine when a first operation mode, according to a user setting is selected, thereby maximizing the operation amount of the excavator, and configured to control the driving operation of the generator driver or the swing motor driver with a swing power ratio of r (i.e., a user set value) and a hydraulic horsepower ratio of 1-r using either the power of the energy storage device or the horsepower of the engine when a second operation mode according to a user setting is selected, thereby minimizing fuel consumption through the limitation of the horsepower.

Preferably, the energy storage device may be either a battery or a super capacitor capable of storing the electric energy, or an accumulator capable of storing hydraulic energy.

To achieve the above objectives, in another aspect, the present invention provides a horsepower control method of a horsepower control system for a hybrid excavator including an engine, a hydraulic pump configured to be driven by the engine to drive a hydraulic actuator by hydraulic fluid, a generator configured to be driven by the engine to generate electric energy, and an energy storage device configured to charge the electric energy generated from the generator and supply the electric energy to a swing electric motor. The horsepower control method including the steps of: controlling the driving operation of a generator driver or a swing motor driver with a swing power ratio of 1 (or 100%) and a hydraulic horsepower ratio of 1 (or 100%) using both the power of the energy storage device and the horsepower of the engine when a first operation mode according to a user setting is selected, thereby maximizing the operation amount of the excavator; and controlling the driving operation of the generator driver or the swing motor driver with a swing power ratio of r (i.e., a user set value) and a hydraulic horsepower ratio of 1-r using either the power of the energy storage device or the horsepower of the engine when a second operation mode according to a user setting is selected, thereby minimizing fuel consumption through the limitation of the horsepower.

### ADVANTAGEOUS EFFECTS

The horsepower control system for a hybrid excavator and a control method thereof according to the present invention as constructed above has the following advantages.

In the case where it is desired to use the full power required by a user without limitation, energy of an energy storage device is used at a horsepower level which is greatly higher than the instantaneous horsepower level of the conventional hydraulic system without providing any additional constituent element and incurring any additional costs to maximize the operation amount and improve a user's convenience, while in the case where it is desired to use the full power within the range of an available horsepower, each driving device is limitedly used at a horsepower level that is similar to the horsepower level of the conventional hydraulic system to minimize fuel consumption.

### BRIEF DESCRIPTION OF THE DRAWINGS

The above and other objects, features and advantages of the present invention will be more apparent from the following detailed description taken in conjunction with the accompanying drawings, in which:

FIG. 1 is a block diagram illustrating the construction of a horsepower control system for a hybrid excavator according to the present invention;

FIG. 2 is a flowchart sequentially illustrating the control operation of a horsepower control system for a hybrid excavator according to the present invention; and

FIG. 3 is a table illustrating the relationship between an operation mode and a swing power ratio/a hydraulic horsepower ratio.

* Explanation on reference numerals of main elements in the drawings *

101: engine 102: hydraulic pump

103: generator 104: swing electric motor

105: energy storage device 106: generator driver

107: swing motor driver 108: power controller

109: user setting input means

### BEST MODE FOR CARRYING OUT THE INVENTION

Now, a horsepower control system for a hybrid excavator and a control method thereof according to the preferred embodiments of the present invention will be described hereinafter in detail with reference to the accompanying drawings.

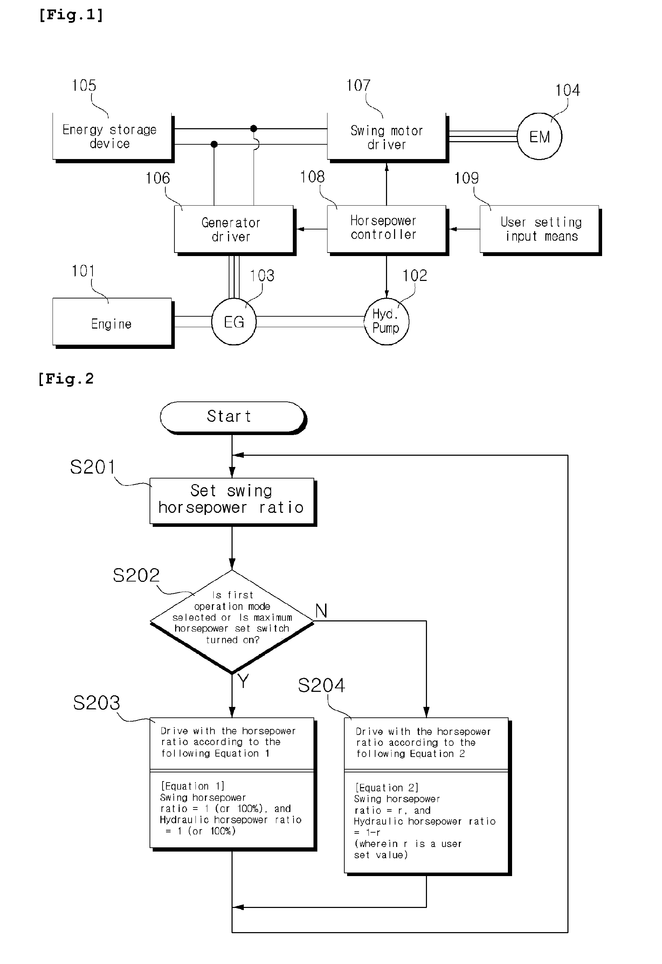

FIG. 1 is a block diagram illustrating the construction of a horsepower control system for a hybrid excavator according to the present invention.

As shown in FIG. 1, the horsepower control system of the present invention includes an engine 101, a hydraulic pump 102 that is configured to be driven by the engine 101 to drive a hydraulic actuator by hydraulic fluid, a generator 103 that is configured to be driven by the engine 101 to generate electric energy, and an energy storage device 105 configured to charge the electric energy generated from the generator 103 and supply the electric energy to an swing electric motor 104. For example, the energy storage device 105 may be either a battery or a super capacitor capable of storing electric energy, or an accumulator capable of storing hydraulic energy. The horsepower control system for a hybrid excavator further includes a power controller 108. The power controller 108 is configured to control the driving operation of a generator driver 106 or a swing motor driver 107 with a swing power ratio of 1 (or 100%) and a hydraulic horsepower ratio of 1 (or 100%) using both the power of the energy storage device 105 and the horsepower of the engine 101 when a first operation mode according to a user setting is selected (or when a maximum power set switch is turned on), thereby maximizing the operation amount of the excavator, and is configured to control the driving operation of the generator driver 106 or the swing motor driver 107 with a swing power ratio of r (i.e., a user set value) and a hydraulic horsepower ratio of 1-r using either the power of the energy storage device 105 or the horsepower of the engine when a second operation mode according to a user setting is selected (or when a maximum power set switch is turned off), thereby minimizing fuel consumption through the limitation of the horsepower.

Herein, the power controller 108 sets the swing power ratio according the user setting and then identifies the operation mode selected by the user. As a result of the identification, if it is determined that the first operation mode is selected by the user (i.e., in the case where it is desired to use the full power required by the user without limitation), the power controller 108 controls the generator driving operation of the generator driver 106 or the swing electric motor driving operation of the swing motor driver 107 with a swing power ratio of 1 (or 100%) and a hydraulic horsepower ratio of 1 (or 100%) using both the power of the energy storage device 105 and the horsepower of the engine 101 to thereby maximize the operation amount of the excavator. On the other hand, if it is determined that the operation mode selected by the user is the second operation mode but not the first operation mode (i.e., in the case where it is desired to use the full power within the range of an available horsepower), the power controller 108 controls the swing electric motor driving operation of the generator driver 106 or the swing electric motor driving operation of the swing motor driver 107 with a swing power ratio of r (i.e., a user set value) and a hydraulic horsepower ratio of 1-r at a horsepower level that is similar to the horsepower level of the existing system, i.e., using either the power of the energy storage device 105 or the horsepower of the engine 101 to thereby minimize fuel consumption through the limitation of the horsepower.

The generator driver 106 serves to control the driving operation of the generator 103 differently according to different operation modes (e.g., first and second operation modes) under the control of the power controller 108. For example, if the operation mode selected by the user is the first operation mode (i.e., in the case where it is desired to use the full power required by the user without limitation), the generator driver 106 controls the driving operation of the generator 103 under the control of the power controller 108 with a swing power ratio of 1 (or 100%) and a hydraulic horsepower ratio of 1 (or 100%) using both the power of the energy storage device 105 and the horsepower of the engine 101 to thereby maximize the operation amount of the excavator. On the contrary, if the operation mode selected by the user is the second operation mode (i.e., in the case where it is desired to use the full power within the range of an available horsepower), the generator driver 106 controls the driving operation of the generator 103 under the control of the power controller 108 with a swing power ratio of r (i.e., a user set value) and a hydraulic horsepower ratio of 1-r at a horsepower level that is similar to the horsepower level of the existing system, i.e., using either the power of the energy storage device 105 or the horsepower of the engine 101 to thereby minimize fuel consumption through the limitation of the horsepower.

The swing motor driver 107 serves to control the driving operation of the swing electric motor 104 differently according to different operation modes (e.g., first and second operation modes) under the control of the power controller 108. For example, if the operation mode selected by the user is the first operation mode (i.e., in the case where it is desired to use the full power required by the user without limitation), the swing motor driver 107 controls the driving operation of the swing electric motor 104 under the control of the power controller 108 with a swing power ratio of 1 (or 100%) and a hydraulic horsepower ratio of 1 (or 100%) using both the power of the energy storage device 105 and the horsepower of the engine 101 to thereby maximize the operation amount of the excavator. On the contrary, if the operation mode selected by the user is the second operation mode (i.e., in the case where it is desired to use the full power within the range of an available horsepower), the swing motor driver 107 controls the driving operation of the swing electric motor 104 under the control of the power controller 108 with a swing power ratio of r (i.e., a user set value) and a hydraulic horsepower ratio of 1-r at a horsepower level that is similar to the horsepower level of the existing system, i.e., using either the power of the energy storage device 105 or the horsepower of the engine 101 to thereby minimize fuel consumption through the limitation of the horsepower.

The user setting input means 109 may include a key switch for selecting different operation modes (e.g., first and second operation modes) independently, or may include only a key switch for selecting the first operation mode in which it is desired to use the full power required by the user without limitation). In this case, the other operation mode, i.e., the second operation mode may be set as a default mode. Additionally, the user setting input means 109 may further include a means for inputting a swing power ratio value according to a user setting.

### Mode for Invention

Hereinafter, the control operation of the horsepower control system for a hybrid excavator according to the present invention will be described with reference to FIG. 2.

FIG. 2 is a flowchart sequentially illustrating the control operation of a horsepower control system for a hybrid excavator according to the present invention.

As shown in FIG. 2, in the control operation of the horsepower control system, first, at step S201, the power controller sets a swing power ratio inputted according to a user setting.

Subsequently, the program proceeds to step S202 where the power controller identifies the operation mode selected by the user.

As a result of the identification, if it is determined at step S202 that the first operation mode is selected by the user (i.e., in the case where it is desired to use the full power required by the user without limitation), the program proceeds to step S203 where the power controller 108 controls the generator driving operation of the generator driver 106 or the swing electric motor driving operation of the swing motor driver 107 with the ratio according to the following Equation 1 using both the power of the energy storage device 105 and the horsepower of the engine 101 to thereby maximize the operation amount of the excavator:

**[Equation 1]**

Swing power ratio = 1 (or 100%), and

Hydraulic horsepower ratio = 1 (or 100%).

On the contrary, if it is determined at step S202 that the operation mode selected by the user is the second operation mode (i.e., in the case where it is desired to use the full power within the range of an available horsepower), the program proceeds to step S204 where the power controller 108 controls the swing electric motor driving operation of the generator driver 106 or the swing electric motor driving operation of the swing motor driver 107 with the ratio according to the following Equation 2 at a horsepower level that is similar to the horsepower level of the existing system, i.e., using either the power of the energy storage device 105 or the horsepower of the engine 101 to thereby minimize fuel consumption through the limitation of the horsepower:

**[Equation 2]**

Swing power ratio = r, and

Hydraulic horsepower ratio = 1-r,

wherein r is a user set value.

As such, the present invention is constructed such that in the case where it is desired to use the full power required by a user without limitation, energy of the energy storage device is used at a horsepower level which is greatly higher than the instantaneous horsepower level of the existing system to maximize the operation amount, while in the case where it is desired to use the full power within the range of an available horsepower, each driving device is limitedly used at a horsepower level that is similar to the horsepower level of the existing system to minimize fuel consumption.

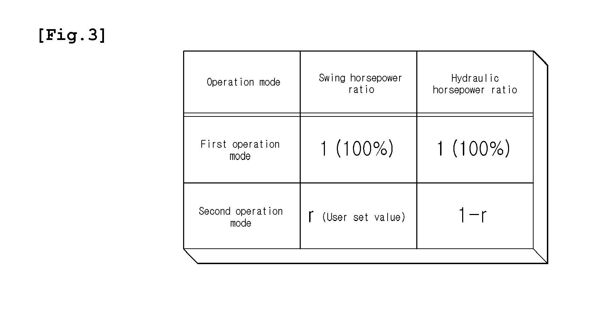

FIG. 3 is a table illustrating the relationship between an operation mode and a swing power ratio/a hydraulic horsepower ratio.

As shown in FIG. 3, when the first operation mode is selected by the user (i.e., in the case where it is desired to use the full power required by a user without limitation), the driving operation of the driving device is controlled with a swing power ratio of 1 (or 100%) and a hydraulic horsepower ratio of 1 (or 100%), thereby maximizing the operation amount of the excavator. On the other hand, when the second operation mode is selected by the user (i.e., in the case where it is desired to use the full power within the range of an available horsepower), power ratio of r (i.e., a user set value) and a hydraulic horsepower ratio of 1-r, thereby minimizing fuel consumption through the limitation of the horsepower. the driving operation of the driving device is controlled with a swing

### INDUSTRIAL APPLICABILITY

The inventive horsepower control method can be used in the horsepower control system for a hybrid excavator.

In the case where it is desired to use the full power required by a user without limitation, energy of an energy storage device is used at a horsepower level which is greatly higher than the instantaneous horsepower level of the existing system to maximize the operation amount of the excavator, while in the case where it is desired to use the full power within the range of an available horsepower, each driving device is limitedly used at a horsepower level that is similar to the horsepower level of the existing system to minimize fuel consumption.

## Claims

1. A horsepower control system for a hybrid excavator, comprising:
an engine;
a hydraulic pump configured to be driven by the engine to drive a hydraulic actuator by hydraulic fluid;
a generator configured to be driven by the engine to generate electric energy;
an energy storage device configured to charge the electric energy generated from the generator and supply the electric energy to an swing electric motor; and
a power controller configured to control the driving operation of a generator driver or a swing motor driver with a swing power ratio of 1 (or 100%) and a hydraulic horsepower ratio of 1 using both the power of the energy storage device and the horsepower of the engine when a first operation mode according to a user setting is selected, thereby maximizing the operation amount of the excavator, and configured to control the driving operation of the generator driver or the swing motor driver with a swing power ratio of r (i.e., a user set value) and a hydraulic horsepower ratio of 1-r using either the power of the energy storage device or the horsepower of the engine when a second operation mode according to a user setting is selected, thereby minimizing fuel consumption through the limitation of the horsepower.

2. The horsepower control system according to claim 1, wherein the energy storage device is either a battery or a super capacitor capable of storing the electric energy, or an accumulator capable of storing hydraulic energy.

3. A horsepower control method of a horsepower control system for a hybrid excavator including an engine, a hydraulic pump configured to be driven by the engine to drive a hydraulic actuator by hydraulic fluid, a generator configured to be driven by the engine to generate electric energy, and an energy storage device configured to charge the electric energy generated from the generator and supply the electric energy to an swing electric motor, the horsepower control method comprising the steps of:
controlling the driving operation of a generator driver or a swing motor driver with a swing power ratio of 1 (or 100%) and a hydraulic horsepower ratio of 1 (or 100%) using both the power of the energy storage device and the horsepower of the engine when a first operation mode according to a user setting is selected, thereby maximizing the operation amount of the excavator; and
controlling the driving operation of the generator driver or the swing motor driver with a swing power ratio of r (i.e., a user set value) and a hydraulic horsepower ratio of 1-r using either the power of the energy storage device or the horsepower of the engine when a second operation mode according to a user setting is selected, thereby minimizing fuel consumption through the limitation of the horsepower.
